# EUROPÄISCHE PATENTSCHRIFT

(11) **EP 0 527 957 B1**
(45) Veröffentlichungstag und Bekanntmachung des Hinweises auf die Patenterteilung: **12.10.1994**
(21) Anmeldenummer: 91913567.3
(22) Anmeldetag: 26.07.1991
(51) Int. Cl.: B29C 43/00, B29K 67/00

(54) **GEFORMTER KÖRPER AUS AROMATISCHEN POLYESTERN**
MOULDED AROMATIC-POLYESTER ARTICLE
PRODUITS MOULES EN POLYESTERS AROMATIQUES

(30) Priorität: 04.02.1991 WO PCT/AT91/00017
(43) Veröffentlichungstag der Anmeldung: 24.02.1993
(73) Patentinhaber: ISONOVA TECHNISCHE INNOVATIONEN GES.M.B.H., A-2355 Wiener Neudorf (AT)
(72) Erfinder: FIALLA, Peter, A-2344 Maria Enzersdorf (AT)
(74) Vertreter: Stampfer, Heinz
(86) Internationale Anmeldenummer: AT9100091
(87) Internationale Veröffentlichungsnummer: WO9213698

(56) Entgegenhaltungen:
- EP-A- 0 064 971
- WO-A-91/11312
- US-A- 3 558 550
- US-A- 3 829 406
- US-A- 3 980 749
- US-A- 4 064 077
- Datenbank Chemical Abstracts (STN), Band 85, Nr. 18, 1976 (Columbus, Ohio, US), V.P. Sidorova et al.: "Physical properties of heat resistant aromatic polymers", siehe Zusammenfassung Nr. 124795n & Plast. Massy, Band 7, Seiten 56-9, 1976 (in der Anmeldung erwähnt)
- Polymer Science U.S.S.R., Band 21, 1979, (Oxford, GB), V.V. Korshak et al.: "Thermal degradation of pressure moulded aromatic polyamides", Seiten 34-38, siehe Seite 32, Zeilen 3-12

## Beschreibung

### Technisches Gebiet

Die Erfindung betrifft einen geformten Körper, bestehend im wesentlichen aus einem oder mehreren aromatischen Polyestern, nämlich Polyarylaten, hergestellt auf Basis von Phthalsäurehalogeniden und Diphenolen der Formel 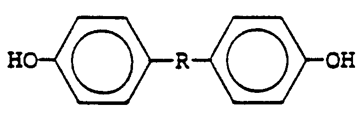
wobei R ein bifunktioneller, mindestens einen aromatischen oder cycloaliphatischen Ring enthaltender Kohlenwasserstoffrest ist. Sie betrifft ferner ein vorteilhaftes Verfahren zum Herstellen solcher Körper.

### Stand der Technik

Körper dieser Art sind z.B. aus der EP-A-64971 und EP-A-64972 bekannt, und zwar in Form von aus einer Polyesterlösung durch einen Gießprozeß hergestellten Folien. Der in der EP-A-64972 beschriebene Polyester ist dabei einer auf Basis von 1,1-Bis(4-hydroxyphenyl)-1-phenyläthan, der wie gefunden wurde, sich durch Extrusion oder Spritzguß wegen der dabei notwendigen hohen Prozeßtemperaturen von 330 bis 400°C nur schwer verarbeiten läßt, während der aus der europäischen Patentschrift 64971 bekannte Polyester auf Basis von 9.9-Bis(4-hydroxyphenyl)-fluoren überhaupt keinen Schmelzbereich hat, sondern sich bei einer erhöhten Temperatur von etwa 400°C thermisch zu zersetzen beginnt. Die russische Veröffentlichung in "Plasticheskie Massy, No.7, 1976, S.56, "Physical properties of heat-resistant aromatic polymers", dessen englische Übersetzung in "International Polymer Science and Technolgy, Vol.3, No.11, 1976 erschienen ist, vergleicht die Eigenschaften von Polyarylatfilmen mit Blöcken aus demselben Material, die bei hoher Temperatur geformt wurden. Dabei wurde festgestellt, daß die Folien im allgemeinen eine höhere Dichte aufweisen als Blöcke aus gleichem Material, Unterschiede in der Löslichkeit in einigen üblichen Lösungsmitteln aber nicht bestehen. Eine ausreichende Löslichkeit solcher Polyarylate in einem geeigneten Lösungsmittel ist ja die Voraussetzung für ihre Verarbeitung zu Filmen in einem Gießprozeß. Sie schließt aber andererseits manche Anwendungen von Polyarylaten aus, bei denen eine weitgehende Chemikalien- und Lösungsmittelbeständigkeit gefordert wird.

Verfahren zur Herstellung von geformten Körpern auf Basis von aromatischen Polymerpulver ist beispielsweise aus der US-A-4,064,077 bekannt.

### Darstellung der Erfindung

Der Erfindung liegt zunächst die Aufgabe zugrunde, einen geformten Körper der eingangs genannten Art anzugeben, der im Gegensatz zu Folien eine weitgehend beliebige Raumform einnehmen kann und der eine höhere Lösungsmittelbeständigkeit aufweist als gegossene Folien hergestellt auf Basis desselben Kunststoffes.

Diese Aufgabe wird in dem erfindungsgemäßen geformten Körper gelöst, der dadurch gekennzeichnet ist, daß er aus einem transluzenten, weitgehend porenfreien Sinterkörper mit einem oder mehreren mittels DSC gemessenen Glasübergangspunkt(en) im Bereich zwischen 220 und 400°C und eine Zugfestigkeit nach DIN 53455 von größer als 40 N/mm², vorteilhaft aber von größer als 60 N/mm², besteht, und der an einem Probenstück mit einer Dicke von etwa 1,0 mm eine Tetrachlorkohlenstoffaufnahme von weniger als 1,0%, vorteilhaft von weniger als 0,8%, des Probegewichts bei einer Einwirkdauer von 24 h in einem Tetrachlorkohlenstoffbad bei 23°C aufweist.

Es hat sich nun gezeigt, daß bei gleicher Art und Qualität des Ausgangsmaterials die erfindungsgemäßen Sinterkörper im Verhältnis zu gegossenen Folien eine höhere Beständigkeit gegen die Wirkung gewisser Lösungsmittel wie Tetrachlorkohlenstoff aufweisen. Aus dieser und anderen Tatsachen, auf die im Rahmen der Beschreibung noch näher eingegangen wird, kann man mit einer gewissen Wahrscheinlichkeit schließen, daß die den Sinterkörper bildende Polyestermasse zu einem gewissen Grad vernetzt ist.

In einer vorteilhaften Ausgestaltung der Erfindung besteht der erfindungsgemäße Sinterkörper im wesentlichen aus einem aromatischen Polyester auf Basis von 9,9-Bis(4-hydroxyphenyl)fluoren als Diphenol.Gemäß einer anderen vorteilhaften Ausgestaltung des erfindungsgemäßen Sinterkörpers besteht dieser im wesentlichen aus einem aromatischen Polyester auf Basis von 1,1-Bis-(4-hydroxyphenyl)-1-phenyläthan und er weist eine Zugfestigkeit nach DIN 53455 von größer als 50 N/mm², insbesondere aber von großer als 70 N/mm² auf.

Die Erfindung betrifft ferner ein vorteilhaftes Verfahren zur Herstellung der erfindungsgemäßen geformten Körper. Dieses Verfahren ist dadurch gekennzeichnet, daß der oder die aromatischen Polyester in Pulverform unter einem Druck von höher 3000 N/cm² verdichtet werden, daß das verdichtete Pulver unter Beibehaltung des Druckes langsam mit einer Aufheizrate von 1,5 bis 4,0°C/min auf Temperaturen erhitzt wird, die höher sind als der oder die Glasübergangspunkt(e) des oder der eingesetzten Polyester, daß die so komprimierte und unter Druck stehende Pulvermasse zur Bildung eines gesinterten Körpers während einer längeren Haltezeit auf diesen Temperaturen gehalten wird, und daß der so gesinterte Körper langsam abgekühlt wird. Dabei werden der oder die Polyester in Pulverform unter einem Druck von etwa 10.000 N/cm² verdichtet.

Nach vorteilhaften Ausgestaltungen des erfindungsgemäßen Verfahrens erfolgt das langsame Erhitzen des komprimierten Polyesterpulvers mit einer Aufheizrate im Bereich von 1,5 bis 4,0°C/min und/oder das langsame Abkühlen des gesinterten Körpers mit einer Rate im Bereich von 0,5 bis 2,5°C/min.

Gemäß einer anderen vorteilhaften Ausgestaltung des erfindungsgemäßen Verfahrens liegt die Haltezeit im Bereich von 5 - 20 min/mm der mittleren in Richtung des aufgebrachten Druckes bestimmten Dicke des zu erzeugenden Sinterkörpers.

In einer weiteren vorteilhaften Ausgestaltung des erfindungsgemäßen Verfahrens erfolgt das Abkühlen des gesinterten Körpers zumindest zum Teil unter Beaufschlagung mit einem gegenüber dem aufgebrachten Maximaldruck stark reduzierten Druck.Gemäß einer letzten vorteilhaften Ausgestaltung des erfindungsgemäßen Verfahrens erfolgt das Abkühlen des gesinterten Körpers zumindest zum Teil unter Beaufschlagung mit einem gegenüber dem aufgebrachten Maximaldruck stark reduzierten Druck.

### Einige Wege zur Ausführung der Erfindung

Die Erfindung wird nachstehend anhand von Beispielen näher erläutert. Die gemäß diesen Beispielen hergestellten Sinterkörper bestehen aus aromatischen Polyestern, wie sie in den europäischen Patentschriften 64972 und 64971 beschrieben sind, und zwar
1. Aromatischer Polyester auf Basis von 1,1-Bis(4-hydroxyphenyl)-1-phenyläthan und Phthalsäurechlorid (iso/tere: 50/50) mit einem mittels DSC gemessenen Glasübergangspunkt von 250°C, nachstehend als CPE bezeichnet.
2. Aromatischer Polyester auf Basis von 9,9-Bis(4-hydroxyphenyl)fluoren und Phthalsäurechlorid (iso/tere: 50/50) mit einem mittels DSC gemessenen Glasübergangspunkt von 325°C, nachstehend als FPE bezeichnet.

Zur Herstellung der Sinterkörper wird von den bei der Synthese in Pulverform anfallenden Polyestern ausgegangen, die ein mittleres Molekulargewicht MW von 50.000 bis 1,200.000 aufweisen, was etwa einer inherenten Viskosität im Bereich von 0,5 bis 3,8 dl/g (gemessen wie in den vorgenannten europäischen Patentschriften angegeben) entspricht. Aus dem bei der Synthese anfallenden Polyesterpulver werden die Siebfraktionen mit Teilchengrößen kleiner als 600 µm, vorteilhaft aber zwischen 50 und 400 µm, eingesetzt.

Diese Pulverfraktion zeigen durch die geringen Partikelgrößen eine gute Sinteraktivität. Durch Wegfall der feinsten Fraktionen wird aber erreicht, daß die Schüttdichte nicht zu klein wird, was für die Preßtechnologie ungünstig wäre. Nachstehend sei die Herstellung eines Sinterkörpers aus CPE durch einen sogenannten Drucksinterprozeß näher beschrieben.

Zur Herstellung des plattenförmigen Sinterkörpers mit den Abmessungen 200 x 220 x 4 mm kommt eine beheizbare Form zum Einsatz. Nach einem Vorheizen der Form auf 150°C wird das zuvor bei einer Temperatur von 150°C während mehreren Stunden in einem Vakuumofen getrocknete CPE-Pulver in entsprechender Menge als Schüttung einer Dichte von 0,35 g/cm³ in den Formraum der unteren Formhälfte eingebracht und die Form durch Aufsetzen der in den Formraum eintauchenden oberen Formhälfte geschlossen. Die Form wird nun in eine Presse gebracht und das CPE-Pulver mit einem Preßdruck von 5000 N/cm² komprimiert, die Formlangsam, d.h. mit einer Aufheizrate von ca. 2°C/min auf 270°C, das heißt also über den Glasübergangspunkt des CPE-Pulvers von 250°C, aufgeheizt und diese Temperatur während ca. 60 min. gehalten. Anschließend wird die Form mit einer Rate von ca. 1°C/min bis auf 230°C abgekühlt, dann der Preßdruck auf einen geringen Wert von etwa 20 N/cm², der nur mehr einen guten Wärmeableitkontakt sicherstellen soll, reduziert, wonach die Form weiter bis auf 50°C abgekühlt und der fertige Sinterkörper dann aus der Form ausgebracht wird. Der so erhaltene Sinterkörper hat einen nach ASTM D 3418-82 bestimmten Glasumwandlungspunkt von 250°C und eine Dichte von 1,21 g/cm³.

In gleicher Weise konnten auch Sinterkörper aus FPE-Pulver hergestellt werden. Zum Unterschied zur CPE-Sinterkörperherstellung wurde bei FPE mit einer Haltetemperatur von 330°C (höher als der Glasübergangspunkt von 325°C) gearbeitet, die Druckentlastung beim Abkühlen erfolgte bei 290°C. Der so erhaltene FPE-Sinterkörper hat einen Glasumwandungspunkt von 325°C und eine Dichte von 1.22 g/cm³.

Die Sinterkörpers aus CPE bzw. FPE haben eine bernsteinartige Färbung und sind gegen Alkohle, Öle und Fette beständig.

Wie eingangs der Beschreibung schon erwähnt, haben die Sinterkörper im Verhältnis zu gegossenen, porenfreien Folien eine höhere Beständigkeit gegen die Wirkung gewisser Lösungsmittel wie Tetrachlorkohlenstoff:
Aus CFE und FPE mit jeweils einem mittleren Molekulargewicht MW = ca. 500.000 werden eine gegossenen Folie und ein Sinterkörper hergestellt. Nach dem Wiederauflösen des Folien- bzw. Sinterkörpermaterials zeigte das Folienmaterial weiter ein Molekulargewicht MW = 500.000, während die des Sinterkörpermaterials auf einen Wert MW = 50.000 abgesunken war. Im Gegensatz zu dem, was man annehmen könnte, nämlich, daß aufgrund des nun niedrigeren Molekulargewichts des Sinterkörpers seine Beständigkeit gegen Lösungsmittel ebenfalls niedriger ist, weist der Sinterkörper eine gegenüber dem Folienmaterial erhöhte Beständigkeit gegen bestimmte Lösungsmittel auf.

Nachstehend sind die Ergebnisse einiger Verlgeichsversuche über die Aufnahme von Tetrachlorkohlenstoff durch Probekörper, nämlich CPE und FPE-Sinterkörper bzw. Folienproben aus jeweils denselben aromatischen Polyestern, wiedergegeben.

Die Versuche wurden an quadratischen Proben mit einer Dicke von ca. 0,7 bis 1,1 mm bzw. einer Abmessung von 24 x 24 mm durchgeführt. Dazu wurde jeweils bei Raumtemperatur (23°C) eine Filmprobe (F) und eine Sinterkörperprobe (X) in mit Tetrachlorkohlenstoff gefüllten Bechergläsern während 4 h bzw. 24 h untergetaucht gehalten und nach Trockenwischen der Oberfläche gewogen und vermessen.

Dabei haben sich folgende Werte ergeben:

| Polyester | Probe | Dicke [mm] | Masse Oh [g] | nach 4h [g] | Massen Zunahme in ‰ | nach 24h [g] | Massen Zunahme in ‰ |
|---|---|---|---|---|---|---|---|
| CPE | 1X | 0,93 | 0,5935 | 0,5945 | 1,685 | 0,5963 | 4,718 |
| | 1F | 0,95 | 0,5779 | 0,5805 | 4,499 | 0,5878 | 17,131 |
| CPE | 2X | 1,02 | 0,7060 | 0,7073 | 1,841 | 0,7096 | 5,099 |
| | 2F | 1,048 | 0,7052 | 0,7091 | 5,530 | 0,7178 | 17,867 |
| CPE | 3X | 0,749 | 0,5059 | 0,5071 | 2,372 | 0,5089 | 5,930 |
| | 3F | 0,743 | 0,5144 | 0,5166 | 4,277 | 0,5214 | 13,608 |
| FPE | 4X | 0,98 | 0,8822 | 0,8834 | 1,360 | 0,8854 | 3,627 |
| | 4F | 0,995 | 0,8022 | 0,8072 | 6,233 | 0,8202 | 22,438 |
| FPE | 5X | 1,008 | 0,8929 | 0,8940 | 1,232 | 0,8971 | 4,704 |
| | 5F | 1,01 | 0,8188 | 0,8230 | 5,129 | 0,8428 | 29,311 |

Wie man aus der obenstehenden Tabelle sieht, ist bei einer Einwirkdauer von 24 h bei den Film-Proben die Lösungsmittelaufnahme jeweils ein Mehrfaches als bei den korrespondierenden Sinterkörper-Proben. Dies konnte man aufgrund der bekannten russischen Veröffentlichung, die bei Polyarylaten ausdrücklich keine Unterschiede in der Löslichkeit zwischen Film-Proben und Proben aus bei hoher Temperatur verpreßten Blöcken fanden. Rückwirkend kann man das vielleicht damit erklären, daß die Blöcke die gemäß der russischen Veröffentlichung untersucht wurden, möglicherweise nicht porenfrei waren. Tatsächlich ergaben Messungen der Anmelderin an Sinterkörpern, die wegen eines ungenügenden Sinterprozesses noch nicht transluzent waren und offenbar noch Poren enthielten, Werte für die Aufnahme von Tetrachlorkohlenstoff, die wesentlich höher liegen als bei den transluzenten, porenfreien Sinterkörpern gemäß dieser Erfindung.

In der Folge sei ein nun verbessertes Verfahren zur Sinterherstellung beschrieben. Bei diesem Verfahren kommt eine Form zum Einstz, die nicht selbstheizbar, aber dafür unter Druck verriegelbar ist. Die Form wird nach dem Füllen mit dem Polyesterpulver (CPE bzw. FPE) in eine Presse gebracht, wo das Preßgut auf ca. 10.000 N/cm² komprimiert und die Form unter Druck verriegelt wird, so daß auch nach dem Ausbringen der Form aus der Presse die beiden Formhälften auf das Preßgut weiter einen hohen Druck ausüben. Die Form wird dann in einem Ofen langsam, d.h. mit einer Aufheizrate von 2°/min auf 279°C (bei CPE) bzw. auf 330°C (bei FPE) aufgeheizt und für die Herstellung einer Sinterplatte von 4 mm Dicke diese Temperaturen während 60 min gehalten. Danach wird die Ofenheizung abgeschaltet und die Form abkühlen gelassen. Nach Erreichen einer Temperatur von 20°C unterhalb des jeweiligen Glasumwandlungspunktes wird die Form dann außerhalb des Ofens bis auf eine Temperatur von 50°C weitergekühlt, und danach der fertige Sinterkörper entnommen.

Bei der Herstellung der Sinterkörper ist es wichtig,die Form langsam aufzuheizen bzw. abzukühlen. Die zulässigen Aufheiz- und Kühlraten sind dabei umso kleiner, je größer die Dicke des herzustellenden Sinterkörpers ist. Ähnlches gilt auch für die erforderlichen Haltezeiten für die maximale Formtemperatur. Als Faustregel gilt, daß die Haltezeit etwa 15 min/mm Sinterkörperdicke betragen soll.

In den nachstehenden Tabellen sind einige wesentliche Eigenschaften der wie vorstehend beschrieben hergestellten Sinterkörper aus CPE bzw. FPE aufgelistet.

### 1. Mechanische Eigenschaften (bei Raumtemperatur, nach DIN-Normen)

| Eigenschaft | Einheit | CPE | FPE |
|---|---|---|---|
| Zugfestigkeit | N/mm² | 87 | 72 |
| Reißdehnung | % | 9,4 | 4,2 |
| E.Modul (Zugvers.) | N/mm² | 2500 | 2800 |
| Biegefestigkeit | N/mm² | 125 | 123 |
| E-Modul (Biegevers.) | N/mm² | 2550 | 2780 |
| Härte Rockwell M | | 104 | 117 |
| Shore D | | 88 | 91 |

### 2. Tribologische Eigenschaften:

Gemessen auf Stift-Scheibe-Prüfgerät, nach DIN 31680. Scheibe aus Wälzlagerstahl mit Oberflächenrauhigkeit R_{y}= 2 µm.

| | Einheit | CPE | FPE |
|---|---|---|---|
| Reibzahl | | 0,8 | 0,8 |
| Verschleißkoeffizient | mm³/Nm | 3,5.10⁻⁶ | 19,0.10⁻⁶ |

### 3. Thermische Eigenschaften

| | Einheit | CPE | FPE | Methode |
|---|---|---|---|---|
| Glasübergangspunkt | °C | 250 | 325 | DSC |
| Formbeständigkeit in der Wärme (Methode A) | °C | 217,5 | 307 | TMA |
| Linearer Ausdehnungskoeff. | K⁻¹ | 75.10⁻⁶ | 70.10⁻⁶ | TMA |
| Wärmeleitfähigkeit | W/mK | 0,19 | 0,25 | |

### 4. Elektrische Eigenschaften

| Eigenschaft | Einheit | Vorbehandlung | CPE Dicke Wert (mm) | FPE Dicke Wert (mm) |
|---|---|---|---|---|
| Dielektrizitätszahl bei 1 MHz | | - Klimalagerung C48h/23°C/50% | 3,68 | 4,55 |
| | | - Wasserlagerung D24h/23°C | 3,03 | 4,13 |
| Diel.Verlustfaktor bei 1 MHz | | - Klimalagerung C48h/23°C/50% | 18,7.10⁻³ | 16,4.10⁻³ |
| | | - Wasserlagerung D24h/23°C | 23,2.10⁻³ | 17,5.10⁻³ |
| Durchgangswiderstand | Ohm | - Klimalagerung C48/23°C/50% | 3,25 2.10¹⁴ | 3,97 1.10¹⁵ |

### 5. Hygroskopische Eigenschaften

| Eigenschaft | Einheit | CPE | FPE |
|---|---|---|---|
| Wasseraufnahme (Lagerung in Wasser 23°C, 24h) | % | 0,20 | 0,25 |

### 6. Brandeigenschaften

| Sauerstoffindex: | |
|---|---|
| CPE | 33,5 % |
| FPE | 40,0 % |

### Gewerbliche Verwertbarkeit

Die beschriebenen Sinterkörper dienen im allgemeinen als Halbfertigteile oder vorgeformte Bauteilrohlinge, aus denen dann die gewünschten Körper durch eine übliche mechanische spanabhebende Bearbeitung hergestellt werden.

## Patentansprüche

1. Geformter Körper, bestehend im wesentlichen aus einem oder mehreren aromatischen Polyestern, nämlich Polyarylaten, hergestellt auf Basis von Phthalsäurehalogeniden und Diphenolen der Formel 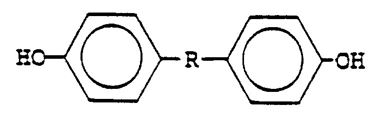 wobei R ein bifunktioneller, mindestens einen aromatischen oder cycloaliphatischen Ring enthaltender Kohlenwasserstoffrest ist, dadurch gekennzeichnet, daß er aus einem transluzenten, weitgehend porenfreien Sinterkörper mit einem oder mehreren mittels DSC gemessenen Glasübergangspunkt(en) im Bereich zwischen 220 und 400°C und eine Zugfestigkeit nach DIN 53455 von größer als 40 N/mm², vorteilhaft aber von größer als 60 N/mm², besteht, und der an einem Probenstück mit einer Dicke von etwa 1,0 mm eine Tetrachlorkohlenstoffaufnahme von weniger als 1,o%, vorteilhaft von weniger als 0,8%, des Probegewichts bei einer Einwirkdauer von 24 h in einem Tetrachlorkohlenstoffbad bei 23°C aufweist.

2. Körper nach Anspruch 1, dadurch gekennzeichnet, daß er im wesentlichen aus einem aromatischen Polyester auf Basis von 9,9-Bis(4-hydroxyphenyl)fluoren als Diphenol besteht.

3. Körper nach Anspruch 1, dadurch gekennzeichnet, daß er im wesentlichen aus einem aromatischen Polyester auf Basis von 1,1-Bis(4-hydroxophenyl)-1-phenyläthan besteht und eine Zugfestigkeit nach DIN 53455 von größer als 50 N/mm², insbesondere von größer als 70 N/mm² aufweist.

4. Verfahren zum Herstellen eines geformten Körpers nach einem der Ansprüche 1 bis 3, dadurch gekennzeichnet, daß der oder die aromatischen Polyester in Pulverform unter einem Druck von höher 3000 N/cm² verdichtet werden, daß das verdichtete Pulver unter Beibehaltung des Druckes langsam mit einer Aufheizrate von 1,5 bis 4,0°C/min. auf Temperaturen erhitzt wird, die höher sind als der oder die Glasübergangspunkt(e) des oder der eingesetzten Polyester, daß die so komprimierte und unter Druck stehende Pulvermasse zur Bildung eines gesinterten Körpers während einer längeren Haltezeit auf diesen Temperaturen gehalten wird, und daß der so gesinterte Körper langsam abgekühlt wird.

5. Verfahren nach Anspruch 4, dadurch gekennzeichnet, daß der oder die pulverförmigen Polyester unter einem Druck von etwa 10000 N/cm² verdichtet werden.

6. Verfahren nach einem der Ansprüche 4 oder 5, dadurch gekennzeichnet, daß das langsame Abkühlen des gesinterten Körpers mit einer Rate im Bereich von 0.5 bis 2,5°C/min erfolgt.

7. Verfahren nach einem der Ansprüche 4 bis 6, dadurch gekennzeichnet, daß die Haltezeit im Bereich von 5 bis 20 min/mm der mittleren in Richtung des aufgebrachten Druckes bestimmten Dicke des zu erzeugenden Sinterkörpers liegt.

8. Verfahren nach einem der Ansprüche 4 bis 7, dadurch gekennzeichnet, daß das Abkühlen des gesinterten Körpers zumindest zum Teil unter Beaufschlagung mit einem gegenüber dem aufgebrachten Maximaldruck stark reduzierten Druck erfolgt.

## Claims

1. A moulded article, substantially comprising one or more aromatic polyesters, namely polyarylates, produced from phthalic acid halides and diphenols of the formula 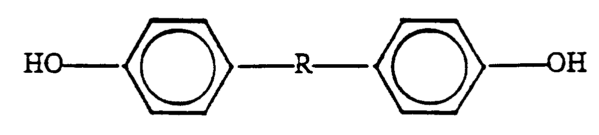 wherein R is a bifunctional hydrocarbon residue containing at least one aromatic or cycloaliphatic ring, characterised in that the article comprises a translucent, substantially pore-free sintered body with one or more glass transition points in the range between 220 and 400°C measured by DSC and a tensile strength, in accordance with DIN 53455, higher than 40 N/mm² but preferably higher than 60 N/mm², and which in the form of a test piece of a thickness of about 1.0 mm exhibits a carbon tetrachloride absorption of less than 1.0 %, preferably less than 0.8 %, of the test piece weight over a contact time of 24 h in a bath of carbon tetrachloride at 23°C.

2. An article according to Claim 1, characterised in that it substantially comprises an aromatic polyester produced from 9,9-bis(4-hydroxyphenyl)fluorene as diphenol.

3. An article according to Claim 1, characterised in that it substantially comprises an aromatic polyester produced from 1,1-bis(4-hydroxyphenyl)-1-phenylethane and has a tensile strength, in accordance with DIN 53455, higher than 50 N/mm² in particular higher than 70 N/mm².

4. A method of producing a moulded article according to any one of Claims 1 to 3, characterised in that the aromatic polyester or polyesters in powder form are compacted under a pressure above 3,000 N/cm², in that the compacted powder is slowly heated at a heating rate of 1.5 to 4.0°C/min., while maintaining the pressure, to temperatures which are higher than the glass transition point or points of the polyester or polyesters used, in that the powder mass thus compressed and maintained under pressure is held at these temperatures for a relatively long retention time so as to form the sintered body, and in that the article thus sintered is slowly cooled.

5. A method according to Claim 4, characterised in that the powdered polyester or polyesters is/are compacted under a pressure of approximately 10,000 N/cm².

6. A method according to either Claim 4 or Claim 5, characterised in that the slow cooling of the sintered body takes place at a rate in the range of 0.5 to 2.5°C/min.

7. A method according to any one of Claims 4 to 6, characterised in that the retention time is in the range of 5 to 20 min/mm of the mean thickness of the sintered body to be produced determined in the direction of the applied pressure.

8. A method according to any one of Claims 4 to 7, characterised in that the cooling of the sintered body takes place at least partly with application of a pressure which is greatly reduced in relation to the maximum pressure applied.

## Revendications

1. Objet formé, consistant principalement en un ou plusieurs polyester(s) aromatiques, à savoir polyarylate(s) obtenu(s) à partir d'halogénures d'acide phtalique et de diphénols de formule : 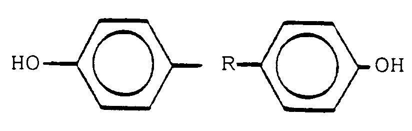 dans laquelle R est un radical hydrocarboné bifonctionnel, contenant au moins un cycle aromatique ou cyclo-aliphatique, caractérisé en ce qu'il consiste en un comprimé fritté translucide, substantiellement exempt de pores, présentant une ou plusieurs température(s) de transition vitreuse mesurée(s) par analyse DSC dans l'intervalle entre 220 et 400°C et une résistance à la traction mesurée selon la norme DIN 53455 supérieure à 40N/mm², de préférence supérieure à 60N/mm²; et en ce qu'il présente, pour un échantillon ayant une épaisseur d'environ 1,0 mm, une absorption de tétrachlorométhane inférieure à 1,0%, de préférence inférieure à 0,8%, du poids de l'échantillon, l'échantillon étant dans un bain de tétrachlorométhane pendant une durée de 24h, à 23°C.

2. Objet selon la revendication 1, caractérisé en ce qu'il consiste principalement en un polyester aromatique obtenu à partir de 9,9-bis(4-hydroxyphényl) fluorène en tant que diphénol.

3. Objet selon la revendication 1, caractérisé en ce qu'il consiste principalement en un polyester aromatique obtenu à partir de 1,1-bis(4-hydroxyphényl)-1-phényléthane et en ce qu'il présente une résistance à la traction, mesurée selon la norme DIN 53455, supérieure à 50N/mm², en particulier supérieure à 70N/mm².

4. Procédé de préparation d'un objet formé selon l'une quelconque des revendications 1 à 3, caractérisé en ce que le ou les polyester(s) aromatique(s) sous forme pulvérulente est (sont) comprimé(s) sous une pression supérieure à 3000N/cm², en ce que la poudre comprimée est chauffée lentement avec maintien de la pression, avec une vitesse de chauffage de 1,5 à 4,0° C/min. jusqu'à des températures qui sont supérieures à la ou les température(s) de transition vitreuse du ou des polyester(s) utilisé(s), en ce que la masse pulvérulente ainsi comprimée et maintenue sous pression est maintenue à ces températures pendant une durée de maintien relativement plus longue pour former un comprimé fritté, et en ce que le fritté ainsi obtenu est refroidi lentement.

5. Procédé selon la revendication 4, caractérisé en ce que le ou les polyester(s) sous forme pulvérulente sont comprimés sous une pression d'environ 10 000N/cm².

6. Procédé selon la revendication 4 ou 5, caractérisé en ce que le refroidissement lent du comprimé fritté est mis en oeuvre avec une vitesse dans l'intervalle de 0,5 à 2,5°C/min.

7. Procédé selon l'une quelconque des revendications 4 à 6, caractérisé en ce que la durée de maintien est comprise entre 5 et 20 minutes par mm d'épaisseur moyenne mesurée selon le sens d'application de la pression.

8. Procédé selon l'une quelconque des revendications 4 à 7, caractérisé en ce que le refroidissement du fritté est mis en oeuvre au moins en partie sous application d'une pression fortement réduite, contraire à la pression maximale imposée.
